# EUROPÄISCHE PATENTANMELDUNG

(11) **EP 1 460 541 A2**
(43) Veröffentlichungstag der Anmeldung: **22.09.2004**
(21) Anmeldenummer: 04000764.3
(22) Anmeldetag: 15.01.2004
(51) Int. Cl.: G06F 11/07

(54) **Verfahren zur Überwachung von Funktionskomponenten in Baumstrukturen**

(30) Priorität: 16.01.2003 DE 10301486
(71) Anmelder: SIEMENS AKTIENGESELLSCHAFT, 80333 München (DE)
(72) Erfinder: Becker, Peter, 76571 Gaggenau (DE)

(57) **Zusammenfassung**

Die Erfindung bezieht sich auf ein Verfahren zur Überwachung von Funktionskomponenten in Baumstrukturen, bei dem die Baumstruktur (Fig. 1) mehrere Ebenen (EB1 bis EB4) mit jeweils mindestens einer Funktionskomponente (FKT) umfasst. Um eine transparente Kontrolle aller Funktionskomponenten einer Baumstruktur und ein schnelles Auffinden von fehlerhaften Funktionskomponenten und die Änderbarkeit innerhalb der Baumstruktur mit minimalster Rückwirkung auf andere Funktionskomponenten zu ermöglichen, wird ein Verfahren vorgeschlagen, bei dem eine Funktionskomponente (FKT) eine Eingangsleiste (E), eine Ausgangsleiste (A) und eine Prüfleiste (P) zur Speicherung von Ereigniselementen umfasst und bei dem eine erfolgreiche Ausführung der Funktionskomponente (FKT X.1.1.1) durch das Setzen eines Ereigniselements in der Ausgangsleiste (A2) angezeigt wird und eine übergeordnete Funktionskomponente (FKT X.1.1) das Ereigniselement in der Ausgangsleiste (A2) der untergeordneten Funktionskomponente in seine Eingangsleiste (E1) übernimmt und mit vorgegebenen Werten in der Prüfleiste (P1) vergleicht und bei Übereinstimmung aller Ereigniselemente der Eingangsleiste (E1) mit den jeweiligen vorgegebenen Werten in der Prüfleiste (P1) ein entsprechend positives Ereigniselement in der Ausgangsleiste (A1) setzt.

## Beschreibung

Die Erfindung bezieht sich auf die Überwachung von Funktionskomponenten in Baumstrukturen. Baumstrukturen werden bei der Programmierung von Steuerungsprogrammen eingesetzt, um Sortierungen vorzunehmen oder komplexe Strukturen zu verwalten. Derartige Steuerungsprogramme werden beispielsweise in Automatisierungssystemen oder Netzwerksteuerungen eingesetzt.

Die Baumstrukturen entstehen bei der Anwendung von Unterprogrammtechnik oder im Zusammenhang mit der Programmierung ineinander geschachtelter Instanzen oder Funktionen. Eine Baumstruktur setzt sich aus Funktionskomponenten zusammen, wobei jede Funktionskomponente viele untergeordnete Funktionskomponenten aufweisen kann. Eine Funktionskomponente ist ein Teilprogramm eines Steuerungsprogramms, bei dem aufgrund vorgegebener Eingaben oder Eingangssignale externer Sensoren oder anderer Teilprogramme ein entsprechendes Endergebnis oder entsprechende Ausgaben erzeugt werden. Eine Funktionskomponente kann beispielsweise zur Ermittlung beispielsweise eines Wertes für den Druck in einem Behälter eines Automatisierungssystems vorgesehen sein, wobei als Eingangsgrößen der Funktionskomponente beispielsweise ein Füllstandswert und ein Temperaturwert zugeführt werden. In der Funktionskomponente wird dann beispielsweise anhand von Tabellen oder Formeln ein Wert für den Druck ermittelt, der weiteren Funktionskomponenten als Eingangsgröße dient.

Baumstrukturen werden insbesondere in sicherheitsrelevanten Bereichen oder zu Testzwecken eingesetzt. Dabei werden alle Teilprogramme oder Funktionskomponenten zumindest einmal durchlaufen, d. h., dass sie innerhalb einer vorgegebenen Zeit erfolgreich abgeschlossen werden und das gewünschte Endergebnis liefern. Wird das gewünschte Ergebnis nicht erzielt, muss die fehlerhafte Funktionskomponente innerhalb der Baumstruktur ausfindig gemacht werden, die das gewünschte Ergebnis nicht liefert. Eine fehlerhafte Funktionskomponente kann beispielsweise dann entstehen, wenn die Eingangssignale bzw. Eingangsvariablen für diese Funktionskomponente nicht richtig zugeführt werden. In einem derartigen Fall liefert die Funktionskomponente trotz richtiger Programmierung einen falschen Ausgangswert oder eine falsche Ausgabe. In einem anderen Fall kann die Programmierung, insbesondere die logische Verknüpfung der Eingangsvariablen, Fehler aufweisen, so dass dadurch der Ausgangswert nicht in gewünschter Weise erzeugt wird.

Insbesondere bei komplexen Strukturen von Programmen zur Steuerung von beispielsweise Automatisierungssystemen ist die Suche nach einer fehlerhaften Funktionskomponente sehr aufwendig. Aufgrund der Baumstruktur erzeugen Fehler, die in der untersten Ebene entstehen, in jeder übergeordneten Ebene wiederum Fehler, da die Funktionskomponenten der übergeordneten Ebenen die Ausgangswerte der untergeordneten Funktionskomponenten weiter benutzen, um wiederum Ausgangswerte zu erzeugen.

Es ist bekannt, in die Programme Statusinformationen zu implementieren, die beispielsweise direkt an die zentrale oder Root-Funktionskomponente gesendet werden. Dabei meldet jedes Unterprogramm oder jede Funktionskomponente den Status an die zentrale oder Root-Funktionskomponente. Auf diese Art kann die Baumstruktur auf Fehler überprüft werden. Diese Statusinformationen müssen jedoch mit einer 1:n-Sicht, wobei n die Anzahl aller Funktionskomponenten ist, implementiert werden. Dies ist einerseits sehr aufwendig, da von jeder Funktionskomponente zur zentralen Funktionskomponente eine Meldung gesendet werden muss, andererseits entsteht bei Änderungen innerhalb von Funktionskomponenten der Baumstruktur das Problem, dass i.d.R. zumindest die zentrale Funktionskomponente mit wenigstens einer 1:n-Beziehung betroffen ist, so dass auch diese Verbindung geändert werden muss. Dies führt zu einer Komplexität bei der Baumstruktur und bei der technischen Umsetzung, die sehr schnell Fehler entstehen lässt.

Zur Überwachung aller Funktionskomponenten ist wegen der Komplexität eine große, unübersichtliche Testfunktionalität notwendig. Es liegt in der Natur von komplexen 1:n-Beziehungen, dass durch Fehlprogrammierung ein Fehlverhalten einer Funktionskomponente nicht entdeckt wird; dies gilt insbesondere für den Fall, wenn solche Baumstrukturen durch Hinzufügen oder Herauslöschen von Funktionskomponenten nachträglich geändert werden.

Durch derartiges Fehlverhalten entstehen instabile Programmstrukturen, die bei den gesteuerten Anlagen oder Automatisierungssystemen zu Fehlfunktionen führen können.

Aufgabe ist es deshalb, ein Verfahren anzugeben, welches eine transparente Kontrolle aller Funktionskomponenten einer Baumstruktur ermöglicht und mit dem ein schnelles Auffinden von fehlerhaften Funktionskomponenten ermöglicht wird und bei dem die Änderbarkeit innerhalb der Baumstruktur mit minimalster Rückwirkung auf andere Funktionskomponenten ermöglicht wird.

Die Aufgabe wird durch ein Verfahren zur Überwachung eines baumstrukturierten Steuerungsprogramms gelöst, bei dem die Baumstruktur mehrere Ebenen mit jeweils mindestens einer Funktionskomponente umfasst und bei dem eine Funktionskomponente eine Eingangsleiste, eine Ausgangsleiste und eine Prüfleiste zur Speicherung von Ereigniselementen umfasst und bei dem eine erfolgreiche Ausführung der Funktionskomponente durch das Setzen eines Ereigniselements in der Ausgangsleiste angezeigt wird und eine übergeordnete Funktionskomponente das Ereigniselement in der Ausgangsleiste der untergeordneten Funktionskomponente in seine Eingangsleiste übernimmt und mit vorgegebenen Werten in der Prüfleiste vergleicht und bei Übereinstimmung aller Ereigniselemente der Eingangsleiste mit den jeweiligen vorgegebenen Werten in der Prüfleiste ein entsprechend positives Ereigniselement in der Ausgangsleiste setzt.

Es wird erfindungsgemäß in jeder Funktionskomponente eine Test- oder Funktionseinheit eingeführt, die eine Eingangsleiste, eine Prüfleiste und eine Ausgangsleiste umfasst. Die Eingangsleiste und die Prüfleiste einer Funktionskomponente weisen eine identische Struktur auf. Eingangsleiste, Prüfleiste und Ausgangsleiste bestehen aus einer jeweils frei definierbaren Anzahl von Ereigniselementen, wobei jedes Ereigniselement eine vorgegebene Größe aufweist und mit einem entsprechend festzulegenden Wert belegt werden kann. In den Ereigniselementen werden Binärwerte als Ereignisse gespeichert. Das Erfassen von Ereignissen in diesen Ereigniselementen kann z. B. durch einen Binärwert oder durch einen Zähler erfolgen.

Die Anzahl der Ereigniselemente in der Eingangsleiste und Prüfleiste ist mindestens so groß, wie die Anzahl der unterlagerten Funktionskomponenten einer Funktionskomponente, die überwacht werden sollen. Die Anzahl der Ereigniselemente in den Ausgangsleisten entspricht wenigstens der Anzahl von Funktionskomponenten in der entsprechend gleichen Ebene. Es ist einerseits möglich, dass einer Funktionskomponente nur eine oder möglicherweise auch keine Funktionskomponente untergeordnet ist, andererseits können aber auch sehr viele Funktionskomponenten unter einer Funktionskomponente untergeordnet sein. Dementsprechend gestaltet sich die Größe der Eingangs-, Prüf- und Ausgangsleiste.

Ein Ereigniselement in der Eingangsleiste registriert den erfolgreichen Abschluss der direkt untergeordneten Funktionskomponenten mit einem Binärwert, beispielsweise mit dem Wert 1. Der Wert 0 steht beispielsweise für einen nicht erfolgreichen Abschluss der untergeordneten Funktionskomponenten.

In einer vorteilhaften Ausgestaltung der Erfindung wird die erfolgreiche Funktionalität oder erfolgreiche Ausführung der überwachenden oder eigenen Funktionskomponente mitverwaltet bzw. überwacht. Dazu sind die Ereignis- und Prüfleisten entsprechend zu erweitern.

Ein Vorteil der Erfindung besteht darin, dass Änderungen, insbesondere lokale und somit überschaubare Änderungen, mit einem geringeren Risiko verbunden sind. Weiter kann durch die einfache Ergänzung bei allen Funktionskomponenten mit den erfindungsgemäßen Eingangs-, Prüf- und Ausgangsleisten ein Fehler, der in einer Funktionskomponente auftritt, sehr schnell aufgefunden werden.

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1:: Baumstruktur mit Funktionskomponenten,
- Fig. 2:: Ausschnitt aus einer Baumstruktur mit erfindungsgemäßen Eingangs-, Prüf- und Ausgangsleisten,
- Fig. 3a:: Belegung der Funktionskomponenten zum Zeitpunkt t0,
- Fig. 3b:: Belegung der Funktionskomponenten zum Zeitpunkt t1,
- Fig. 4:: Baumstruktur mit Fehler.

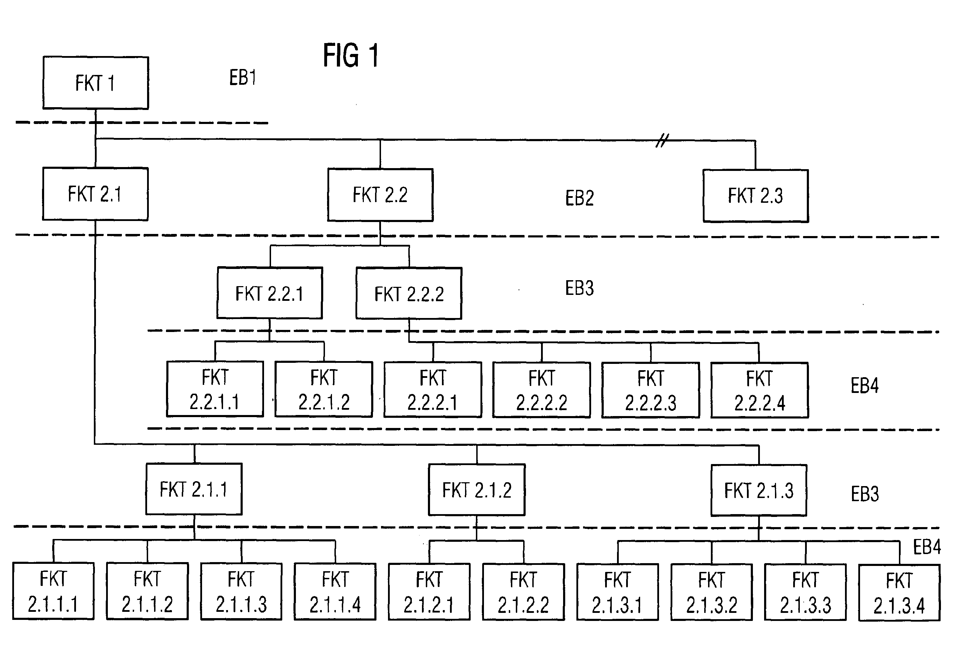

Figur 1 zeigt eine Baumstruktur mit mehreren Funktionskomponenten (FKT), die in 4 Ebenen EB1 bis EB4 angeordnet sind. Die zentrale Funktionskomponente oder Root-Funktionskomponente FKT 1 befindet sich in Ebene 1 (EB1). Darunter sind drei Funktionskomponenten FKT 2.1, 2.2, 2.3 in Ebene 2 (EB2) angeordnet. Die Funktionskomponente FKT 2.1 hat drei untergeordnete Funktionskomponenten FKT 2.1.1, 2.1.2, 2.1.3 und die Funktionskomponente FKT 2.2 hat zwei untergeordnete Funktionskomponenten FKT 2.2.1, 2.2.2, jeweils in der Ebene 3 (EB3). Die Funktionskomponenten in Ebene 3 (EB3) weisen wiederum eine Vielzahl von Funktionskomponenten in Ebene 4 (EB4) auf. Durch die Doppelstriche vor der Funktionskomponente FKT 2.3 ist die Erweiterbarkeit der Baumstruktur angedeutet.

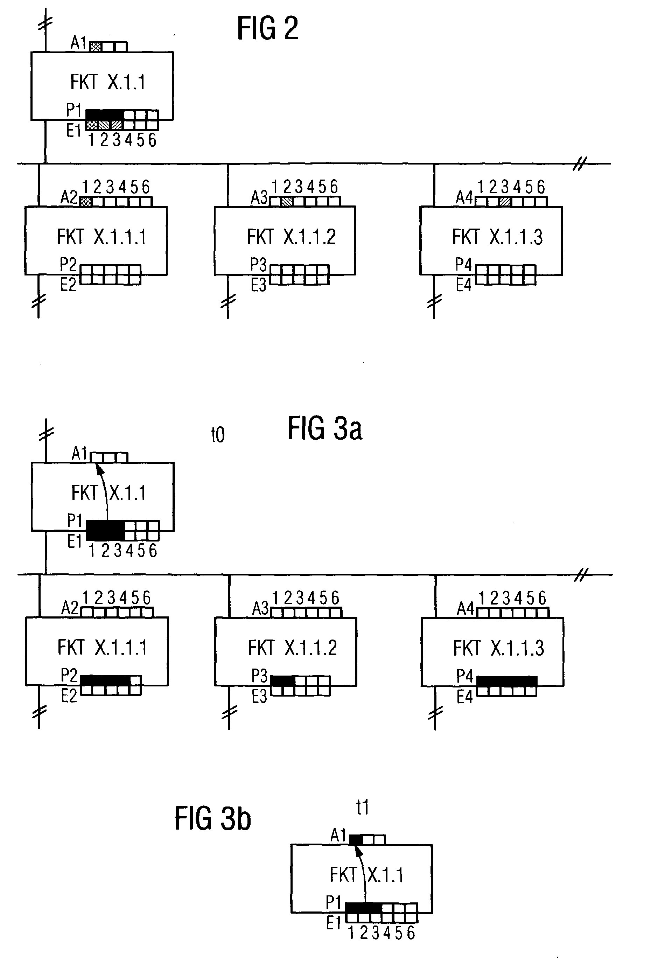

In Figur 2 ist ein Ausschnitt einer Baumstruktur dargestellt. Die Baumstruktur des Ausschnitts ist sowohl in Richtung der Root-Ebene, als auch in Richtung weiterer untergeordneter Funktionskomponenten und Funktionskomponenten in gleicher Ebene erweiterbar, was durch die Doppelstriche in den Verbindungslinien angedeutet wird.

In Figur 2 überwacht die Funktionskomponente FKT X.1.1 mindestens 3 unterlagerte Funktionskomponenten, nämlich FKT X.1.1.1 bis FKT X.1.1.3. Die Zuordnung der Ereigniselemente der Ausgangsleisten A2, A3, A4 auf E1 ist durch Schraffierung der entsprechenden Ereigniselemente gekennzeichnet. Dabei wird das Ereigniselement der Ausgangsleiste A2, das den in diesem Fall erfolgreichen Abschluss der Funktionskomponente FKT X.1.1.1 anzeigt, in das erste Ereigniselement der Eingangsleiste E1, das belegte Ereigniselement der A3 in das zweite Ereigniselement von E1 und das Ereigniselement von A4 in das dritte Ereigniselement von E1 übernommen.

Die Ereigniselemente in den Prüfleisten P sind beispielsweise mit Konstanten belegt, die bei der Programmierung festgelegt werden. In jedem Ereigniselement ist der Binärwert gesetzt, der dem Ergebnis der zugehörigen untergelagerten und zu überwachenden Funktionskomponente entspricht. Stimmen der Binärwert des entsprechenden Ereigniselementes der Prüfleiste mit dem Ergebnis-Binärwert der unterlagerten Funktionskomponente in der Eingangsleiste überein, wird das entsprechende Ereigniselement in der Ausgangsleiste gesetzt. Bei fehlender Übereinstimmung wird ein entsprechend anderer Binärwert (0) in der Ausgangsleiste gesetzt.

Die Anzahl der Ereigniselemente einer Ausgangsleiste entspricht der Anzahl der Funktionskomponenten in der gleichen Ebene. Diese Ausführungsform, in der die Anzahl der Ereigniselemente der Eingangs- und Prüfleiste E und P der Anzahl der Funktionskomponenten in der unterlagerten Ebene entspricht, hat zum Ziel, dass die Ereigniselemente in den Ausgangsleisten A2 bis A4 auf die nächst höheren Ereigniselemente der Eingangsleiste E1 bzw. Prüfleiste P1 1:1 abgebildet werden können.

In Figur 2 weisen die Funktionskomponenten FKT X.1.1.1 bis FKT X.1.1.3 jeweils erfolgreiche Ergebnisse auf, was durch die entsprechend schraffiert dargestellten Ereigniselemente in den Ausgangsleisten A2 bis A4 gezeigt wird.

Es sind aber auch Ausführungsbeispiele denkbar, die eine algorithmische Abbildung mit Ziel vorsehen, dass ein erfolgreicher Abschluss einer unterlagerten Funktionskomponente, z. B. FKT X.1.1.1, in der überwachenden Funktionskomponente FKT X.1.1 eindeutig erkannt und zugeordnet werden kann.

In Figur 3a ist die Belegung der Ereigniselemente in den einzelnen Leisten der Funktionskomponenten zum Zeitpunkt t0 dargestellt, bei der die Ereigniselemente 1, 2 und 3 in der Prüfleiste P1 mit entsprechenden Binärwerten gesetzt sind. In FKT X.1.1 ist dargestellt, dass die Eingangsleiste E1 die Ereigniselemente der unterlagerten Ausgangsleisten A2 bis A4 der FKT X.1.1.1 bis X.1.1.3 übernommen hat. Bei Übereinstimmung zwischen Eingangsleiste und Prüfleiste wird das entsprechende Ereigniselement in der Ausgangsleiste A1 der FKT X.1.1 gesetzt. Eine Funktionskomponente ist dann erfolgreich abgeschlossen, wenn alle zu überwachenden unterlagerten Funktionskomponenten FKT X.1.1.1 bis X.1.1.3 und, je nach Ausführungsform, die eigene Funktionalität erfolgreich abgeschlossen wurden. Die Überwachung der eigenen Funktionalität ist nicht dargestellt. Dazu müssten die Eingangs- und Prüfleiste entsprechend erweitert werden.

In Figur 3a enthält die Eingangsleiste E1 und Prüfleiste P1 der Funktionskomponente FKT X.1.1 das gleiche Bitmuster. In Figur 3b ist dargestellt, dass nach der Erkennung der Übereinstimmung die Funktionskomponente X.1.1 zum Zeitpunkt t1 das entsprechende Ereigniselement der Ausgangsleiste A1 setzt und die Eingangsleiste E1 löscht. Außerdem werden bei Übernahme und/oder Übergabe von Ereigniselementen aus Ausgangsleisten A2, A3, A4 in die Eingangsleiste E1 die entsprechenden Ereigniselemente in den Ausgangsleisten A2 bis A4 gelöscht, so dass der Überwachungszyklus erneut beginnen kann.

Bei dieser Übernahme der Ereigniselemente einer Ausgangsleiste A in die Eingangsleiste E kann auch ein Algorithmus angewandt werden, der z. B. die Übernahme und/oder Übergabe von A nach E nur dann vorsieht, wenn das Ereigniselement in E noch nicht gesetzt ist. Dies würde z. B. für den Fall angewandt werden, wenn nach einem erfolgreichen Abschluss der Funktionskomponente ein weiterer erfolgreicher Abschluss erst dann wieder möglich ist, wenn ein Ereignis außerhalb der Funktionskomponente eintritt, z. B. der Fall, dass alle Funktionskomponenten oder Teile des Funktionsbaues erfolgreich abgeschlossen wurden.
Mit diesen Strukturen lassen sich komplexe Baumstrukturen erzeugen. Mit dem vorgestellten Vorgehen wird die erfolgreiche Bearbeitung der Funktionskomponenten in den einzelnen Ebenen eines Baumes an die jeweils nächst höhere Ebene weitergemeldet. In der Root-Ebene kann die erfolgreiche Bearbeitung aller Funktionskomponenten festgestellt werden. Tritt dieses Ereignis nicht ein, kann, angefangen in der Eingangsleiste E der Root-Funktionskomponente, die Funktionskomponente(n) ermittelt werden, deren eigene oder unterlagerten Funktionskomponenten nicht erfolgreich bearbeitet wurden. Auf einem "binären Pfad" kann dann letztendlich die Funktionskomponente ermittelt werden, deren Funktionalität nicht erfolgreich abgeschlossen wurde.

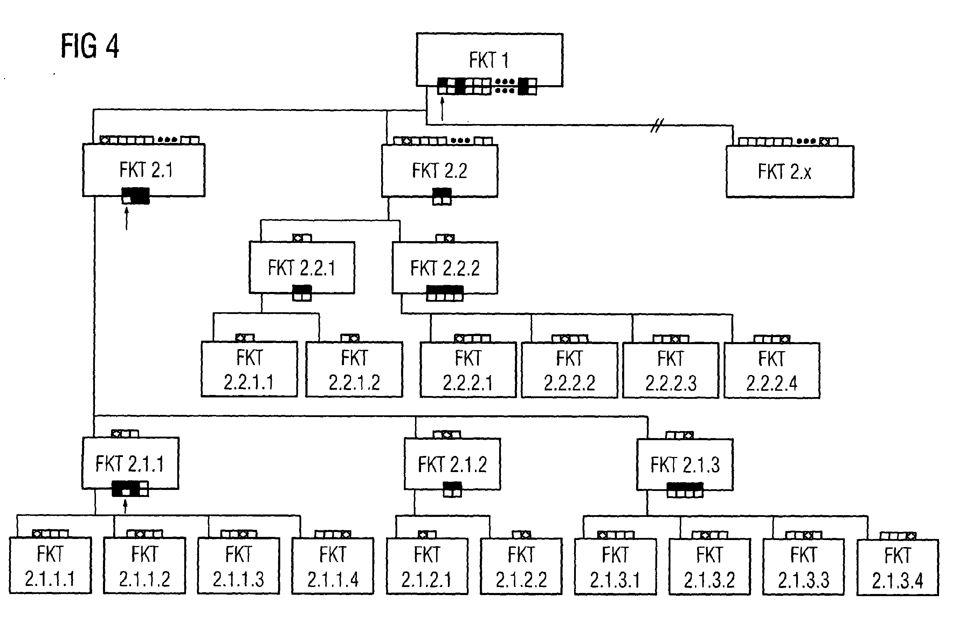

In Figur 4 kann auf diese Weise in der Eingangsleiste der Root-Funktionskomponente FKT 1 über die FKT 2.1, FKT 2.1.1 auf die nicht erfolgreich abgeschlossene Funktionskomponente geschlossen werden (Pfad mit Pfeilen gekennzeichnet). Das von FKT 2.1.1.2 übernommene Ereigniselement stimmt in FKT 2.1.1 nicht mit dem Wert in der Prüfleiste überein, so dass in der Ausgangsleiste von FKT 2.1.1 ein Wert gesetzt wird, der auf einen Fehler hinweist. Dies schlägt sich dann wiederum in dem Vergleich von Eingangs- und Prüfleiste in FKT 2.1 nieder, die wiederum einen Fehler an die FKT 1 weitergibt.

Wird eine zu überwachende Funktionskomponente hinzugefügt, muss bezüglich der Überwachung lediglich in der nächst höheren Funktionskomponente die Eingangsleiste E und Prüfleiste P erweitert werden und in der Prüfleiste P der zugehörige Binärwert gesetzt werden.

Vorteilhaft bei der erfindungsgemäßen Ausgestaltung einer Baumstruktur ist die modulare, baumartige Fehlersuchstrategie, die sich mit der zu testenden Baumstruktur deckt. Dadurch ist eine transparente Kontrolle aller Funktionskomponenten der Baumstruktur möglich. Funktionskomponenten, die nicht das gewünschte Funktionsergebnis liefern, können schnell auf einem "binären Pfad" ermittelt werden. Vorteilhaft bei dieser Anwendung ist, dass das Hinzufügen einer neuen, zu überwachenden Funktionskomponente lediglich eine Rückwirkung auf die nächst höhere Funktionskomponente (Eingangsleiste E und Prüfleiste P) hat; es handelt sich also um eine überschaubare, lokale Änderung. Dadurch wird der Test einer Änderung transparent und sicherer.

Durch den modularen Aufbau wird die Voraussetzung für den Test der gesamten Funktionalität und damit die Sicherheit für das tatsächliche Funktionieren der Überwachung verbessert.

Das Verfahren kann bei Anwendungsprogrammen in speicherprogrammierbaren Steuerungen (SPS) eingesetzt werden. Es eignet sich aber auch beispielsweise für die Steuerung von Kommunikationsnetzen.

Bei einer Anwendung der erfindungsgemäßen Überwachung wird mittels eines Steuerungsprogramms in Baumstruktur die Länge von Bauteilen überwacht. Dabei wird einer Funktionskomponente die Länge des Bauteils zugeführt. Diese Länge wird mit einem Sollwert verglichen. Liegt die Länge innerhalb des Sollwertbereichs, wird das entsprechende Ereigniselement in der Ausgangsleiste der Funktionskomponente gesetzt. Die übergeordnete Funktionskomponente übernimmt die positive Abschlussmeldung in ihre Eingangsleiste und löscht in der untergeordneten Funktionskomponente, in der die Länge überwacht wurde, das entsprechende Ereigniselement in der Ausgangsleiste, so dass diese Funktionskomponente beim nächsten Bauteil erneut eine Überprüfung vornehmen kann.

## Patentansprüche

1. Verfahren zur Überwachung eines baumstrukturierten Steuerungsprogramms, bei dem die Baumstruktur (Fig. 1) mehrere Ebenen (EB1 bis EB4) mit jeweils mindestens einer Funktionskomponente (FKT) umfasst,
**dadurch gekennzeichnet,**
**dass** eine Funktionskomponente (FKT) eine Eingangsleiste (E), eine Ausgangsleiste (A) und eine Prüfleiste (P) zur Speicherung von Ereigniselementen umfasst,
**dass** eine erfolgreiche Ausführung der Funktionskomponente (FKT X.1.1.1) durch das Setzen eines Ereigniselements in der Ausgangsleiste (A2) angezeigt wird,
**dass** eine übergeordnete Funktionskomponente (FKT X.1.1) das Ereigniselement in der Ausgangsleiste (A2) der untergeordneten Funktionskomponente in seine Eingangsleiste (E1) übernimmt und mit vorgegebenen Werten in der Prüfleiste (P1) vergleicht und bei Übereinstimmung aller Ereigniselemente der Eingangsleiste (E1) mit den jeweiligen vorgegebenen Werten in der Prüfleiste (P1) ein entsprechend positives Ereigniselement in der Ausgangsleiste (A1) setzt.

2. Verfahren nach Anspruch 1, **dadurch gekennzeichnet, dass** die Eingangsleiste (E) und Prüfleiste (P) einer Funktionskomponente (FKT) die gleiche Anzahl von Ereigniselementen aufweisen, wobei die Anzahl der Ereigniselemente mindestens der Anzahl der zu überwachenden untergelagerten Funktionskomponenten entspricht.

3. Verfahren nach Anspruch 1, **dadurch gekennzeichnet, dass** die Anzahl der Ereigniselemente einer Ausgangsleiste (A) mindestens der Anzahl von Funktionskomponenten in einer Ebene entspricht.

4. Verfahren nach Anspruch 1, **dadurch gekennzeichnet, dass** die Funktionalität der eigenen Funktionskomponente mitüberwacht wird und das Setzen des Ereigniselements in der Ausgangsleiste der Funktionskomponente vom erfolgreichen Ausführen der Funktionskomponente abhängig ist.

5. Verfahren nach Anspruch 1, **dadurch gekennzeichnet, dass** bei Übernahme eines Ereigniselements in eine Ausgangsleiste (A1) die Eingangsleiste (E1) gelöscht wird.

6. Verfahren nach Anspruch 1, **dadurch gekennzeichnet, dass** bei Übernahme eines Ereigniselements in die Eingangsleiste (E1) die Ausgangsleiste (A2, A3, A4) gelöscht wird.
